(19) **Europäisches Patentamt / European Patent Office / Office européen des brevets**

(11) **EP 0 989 386 B1**

(12) **FASCICULE DE BREVET EUROPEEN**

(45) Date de publication et mention
de la délivrance du brevet:
**20.08.2008 Bulletin 2008/34**

(51) Int Cl.:
*G01C 5/00* *(2006.01)*     *B64D 45/04* *(2006.01)*
*G08G 5/04* *(2006.01)*     *G05D 1/06* *(2006.01)*

(21) Numéro de dépôt: **99402289.5**

(22) Date de dépôt: **20.09.1999**

(54) **Dispositif d'aide à l'atterrissage, notamment pour l'inhibition d'alerte anti-collision sol**

Landehilfevorrichtung, insbesondere zum Abschalten eines Grundkollisionsalarmes

Landing aid device, especially for inhibiting the ground anti-collision alarm

(84) Etats contractants désignés:
**AT BE CH CY DE DK ES FI FR GB GR IE IT LI LU MC NL PT SE**

(30) Priorité: **24.09.1998 FR 9811938**

(43) Date de publication de la demande:
**29.03.2000 Bulletin 2000/13**

(73) Titulaire: **THALES SYSTEMES AEROPORTES S.A.**
**78990 Elancourt (FR)**

(72) Inventeurs:
 • **Meunier, Hugues**
  **78690 Les Essarts Le Roi (FR)**
 • **Lepere, Gérard**
  **93300 Aubervilliers (FR)**
 • **Gauge, Vincent**
  **78000 Versailles (FR)**
 • **Leonardi, Eric**
  **78640 Neauphle le Chateau (FR)**
 • **Roger, Christophe**
  **92150 Suresnes (FR)**

(74) Mandataire: **Plaçais, Jean Yves et al**
**Cabinet Netter,**
**36, avenue Hoche**
**75008 Paris (FR)**

(56) Documents cités:
**EP-A- 0 565 399**     **EP-A- 0 802 469**
**FR-A- 2 717 934**     **FR-A- 2 728 374**

**Description**

L'invention concerne l'atterrissage des aéronefs.

Les avions sont maintenant munis de dispositifs d'alerte anti-collision soltels que ceux décrits par example dans les documents FR 2729374 et FR 2717934. Mais l'atterrissage est une forme de collision - non brutale - avec le sol. A partir d'un certain moment de l'approche d'atterrissage, le dispositif d'alerte va donc engendrer en continu une alerte intempestive. Il est souhaitable que cette alerte soit inhibée sélectivement, pour ne pas gêner inutilement le pilote, dont l'attention est particulièrement sollicitée pendant l'atterrissage.

Une solution connue consiste à inhiber l'alerte lorsque la hauteur au sol de l'aéronef demeure au dessous d'un seuil.

Cette solution n'est pas entièrement satisfaisante. En effet, si le seuil est fixé assez bas, le pilote est inutilement dérangé par une alerte. Si le seuil est fixé assez haut, la gêne due à l'alerte intempestive est diminuée; par contre, on perd le bénéfice du dispositif d'alerte anti-collision sol, à un moment où ses indications peuvent être précieuses, tout particulièrement lorsque le dispositif d'alerte anti-collision sol dont il s'agit est de hautes performances.

En bref, le problème est de réaliser une inhibition dont les qualités soient en rapport avec celles de l'alerte anti-collision sol elle-même, afin d'éviter des conditions d'alerte indésirables lors d'approches d'atterrissage présumées normales.

Ayant posé et analysé ce problème, la Demanderesse a cherché comment définir automatiquement une ou des conditions indiquant qu'une approche d'atterrissage est normale.

L'invention vient offrir des moyens à cet effet.

On peut considérer comme connu un dispositif d'aide à l'atterrissage, comprenant des moyens de traitement, qui reçoivent d'une part des données de trajectoire de l'avion, d'autre part des données sur la position d'au moins une piste d'atterrissage.

Selon l'invention telle que revendiquée dans la revendication 1, les moyens de traitement comprennent des moyens de calcul, aptes à fournir un signal d'état, comprenant au moins une condition qui est fonction des données de trajectoire et des données de piste, cette fonction étant choisie pour exprimer que la trajectoire de l'avion converge vers la piste d'atterrissage.

Selon un autre aspect de l'invention, les moyens de calcul sont agencés pour définir un volume qui possède un contour choisi, positionné d'une manière choisie par rapport à ladite piste d'atterrissage, qui est avantageusement défini par une représentation mémorisée. Et le signal d'état comprend une condition dite statique, portant sur l'appartenance de la position actuelle de l'avion à ce volume.

Selon un autre aspect important de l'invention, le signal d'état comprend en outre une condition dite dynamique, portant sur la convergence d'une trajectoire prédite de l'avion vers ladite piste d'atterrissage, selon un critère choisi.

Selon d'autres aspects de l'invention, que l'on décrira plus loin en détail, on distingue dans la condition statique une sous-condition statique horizontale et une sous-condition statique verticale, et, de préférence, on distingue dans la condition dynamique une sous-condition dynamique horizontale et une sous-condition dynamique verticale.

Une application très importante de l'invention est l'inhibition de certaines au moins des alertes engendrées par un dispositif d'alerte anti-collision sol pour avion, lors de l'approche d'atterrissage. L'invention s'applique tout particulièrement là où les moyens générateurs d'alerte sont fondés sur la comparaison entre des positions situées sur au moins une trajectoire prédite de l'avion et une représentation mémorisée dudit terrain, auquel cas la représentation mémorisée de la piste d'atterrissage est rapportée au même système de coordonnées que la représentation mémorisée du terrain qui sert aux moyens générateurs d'alerte.

D'autres caractéristiques et avantages de l'invention apparaîtront à l'examen de la description détaillée ci-après, ainsi que des dessins annexés, sur lesquels :

- la figure 1 est un schéma de principe très général d'un dispositif d'aide à la navigation aérienne, de type GCAS, tel que ceux décrits dans EP-A-0 565 399 et FR-96 04678;

- la figure 2 est un schéma plus détaillé d'un exemple de réalisation d'un dispositif selon l'invention;

- la figure 3 est un schéma encore plus détaillé du dispositif d'inhibition selon l'invention;

- la figure 4 est une vue de dessus schématique d'une piste d'atterrissage, illustrant un secteur d'inhibition en horizontal;

- les figures 5, 6A et 7 sont des graphiques relatifs à l'inhibition en horizontal;

- la figure 6 est un dessin illustrant différentes situations particulières de la convergence horizontale vers l'axe d'atterrissage;

- les figures 8 et 9 sont deux graphiques relatifs à l'inhibition en vertical.

Les dessins annexés comportent de nombreux éléments qui, pour l'essentiel, sont de caractère certain. En conséquence, ils pourront non seulement servir à mieux faire comprendre l'invention, mais aussi contribuer à la définition de celle-ci, le cas échéant. Il en est de même pour les relations regroupées, dans une Annexe des formules, en fin de description.

En outre, et compte tenu de la technicité de la matière, les contenus descriptifs de EP-A-0 565 399 et EP-A-0 802 469 sont à considérer comme intégralement incorporés à la présente description. Il en est de même pour la demande de brevet français N° 98 00 207.

On utilisera aussi des expressions en anglais et des unités qui n'appartiennent pas au système MKSA, dans la mesure où elles s'imposent en aéronautique civile.

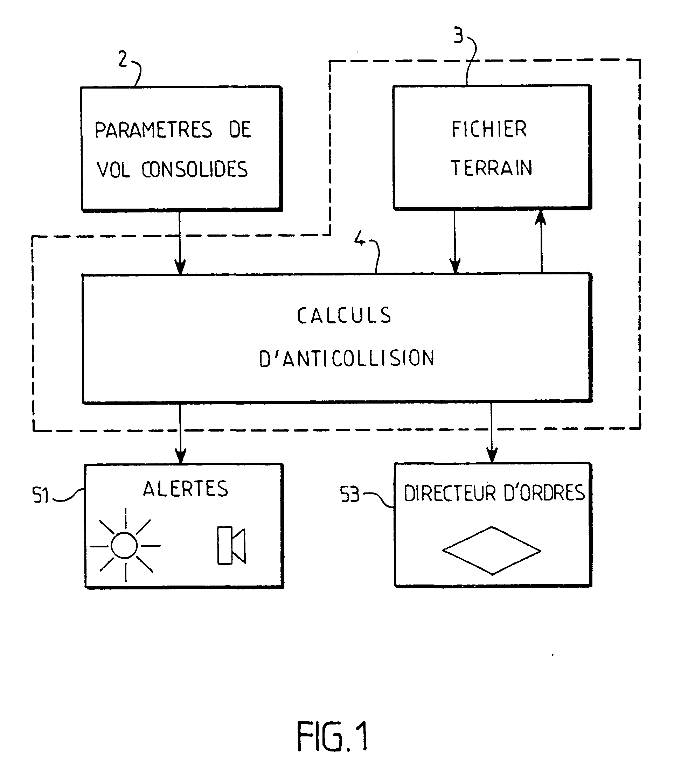

On se réfère tout d'abord à la figure 1.

Le dispositif décrit dans EP-A-0 565 399 est essentiellement destiné à être installé à bord d'un avion. Celui-ci comporte des équipements 2 capables de fournir sous forme de signaux électriques des indications de paramètres de vol (position et "dynamique", notamment), tels qu'une centrale inertielle ou baro-inertielle, et/ou un instrument de radionavigation, comme un récepteur GPS, un radio-altimètre, ou d'autres senseurs embarqués de navigation.

La centrale inertielle fournit les composantes des vecteurs vitesse (V) et accélération de l'aéronef. On peut en déduire tout ou partie des angles caractéristiques associés (incidence, dérapage, pente, tangage, cap, gîte, notamment), ou recueillir directement les valeurs de ces angles utilisées en interne par la centrale inertielle. Ces valeurs angulaires peuvent être affichées et/ou utilisées au niveau du poste de commande. Pour l'altitude, la centrale inertielle coopère avec un altimètre barométrique (non représenté), de manière connue.

Le récepteur GPS fournit des mesures brutes de latitude L1, longitude G1, et altitude Z1, rafraîchies à une cadence p1 de quelques secondes à quelques minutes. Par intégration sur les vecteurs vitesse et accélération, la centrale inertielle fournit d'autres mesures de latitude L2, longitude G2, et altitude Z2, précises mais dérivant dans le temps. Ces grandeurs sont mutuellement validées, selon des techniques de validation connues. Les mesures L2,G2,Z2 validées sont disponibles à la cadence p1. Mais elles sont affinées à partir de la centrale inertielle à une cadence p2 d'environ une seconde.

Tout cela se nomme "paramètres de vol consolidés", et est fourni par l'unité 2.

On définit les notations ci-après:

- Z est la hauteur de l'avion au dessus du sol, émanant par exemple d'un radio-altimètre et/ou de l'altitude barométrique, diminuée du niveau du sol;
- x et y sont les coordonnées horizontales de l'avion dans un repère fixe par rapport au sol. Pour simplifier, l'axe x est pris ici comme l'axe de la piste d'atterrissage considérée.

Une unité 3 contient un fichier terrain, établi d'une façon décrite dans les brevets antérieurs. En fonction des grandeurs longitude et latitude, on accède à une partie de ce fichier, dite carte locale, laquelle est une représentation tridimensionnelle du relief de la région survolée par l'aéronef. A partir de cette carte locale, et des grandeurs de position de l'avion, l'unité 4 effectue des calculs d'anti-collision, qui peuvent être accompagnés de calculs d'évitement de terrain.

En présence d'un risque de collision, une alerte (51) est émise. Un directeur d'ordres 53 peut suggérer une manoeuvre d'évitement. Ceci est à destination du poste de commande (ou de pilotage). La carte locale peut être également utilisée pour la génération d'une image synthétique, avec son dispositif de visualisation.

Tout cela est décrit dans les brevets précités, qui indiquent également comment rapprocher et vérifier mutuellement les différentes informations disponibles, notamment en vertical.

L'une des bases essentielles de EP-A-0 565 399 est le fait que la Demanderesse a perçu la possibilité de stocker à bord d'un aéronef un fichier de terrain susceptible de représenter la quasi-totalité du globe terrestre, dans la limite de contour et de résolution qui convient pour les besoins d'un aéronef. Ainsi, la Demanderesse a proposé un dispositif d'alerte anti-collision sol pour aéronef d'un genre nouveau, qui utilise une base de données embarquée, d'envergure mondiale, et contenant des données de type "altitude du terrain". Cette innovation est de nature à augmenter la sécurité de la navigation aérienne. Elle peut notamment réduire sensiblement le taux de fausses alertes rencontré avec les systèmes d'alerte anti-collision antérieurs. Et l'influence néfaste d'un taux de fausses alertes élevé est aisément comprise: le pilote est d'autant moins attentif au système d'alerte que celui-ci se trompe plus souvent.

La Demanderesse a cherché à réaliser une inhibition dont les qualités soient en rapport avec celles de l'alerte anti-collision sol elle-même, en particulier celle définie ci-dessus, afin d'éviter des alertes indésirables lors d'atterrissages présumés normaux, c'est-à-dire sans problèmes.

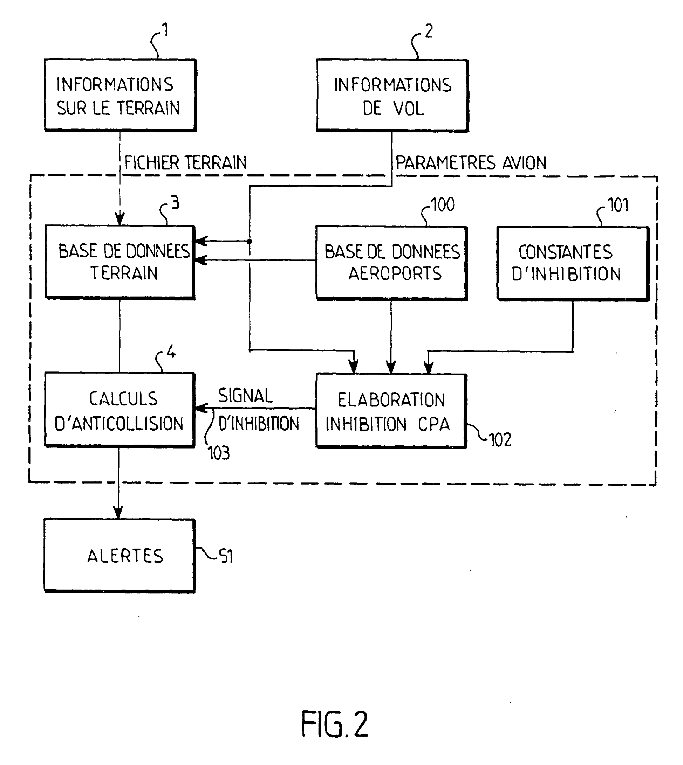

Sur la figure 2, l'unité 3 représente un fichier de "base de données terrain", défini à partir d'informations sur le terrain, chargées par exemple au sol (unité 1). On y ajoute un fichier de "base de données aéroport" 100, qui contient des données définissant l'identification et la position exacte de chacune des pistes de l'aéroport, avec la précision voulue. Très avantageusement, on y ajoute la pente standard d'atterrissage et/ou d'approche à chaque extrémité de certaines au moins des pistes.

A cet égard, le mot "piste" désigne une aire rectangulaire aménagée afin de servir sur sa longueur au roulement des aéronefs. En règle générale, l'atterrissage peut se faire en prenant la piste dans l'un ou l'autre sens. Lorsque le contexte l'impose, on parlera de "piste orientée", pour définir une piste prise dans un sens d'atterrissage donné. Le "seuil" de la piste est le début de son revêtement. Le plus souvent, une piste (orientée) comporte un "seuil décalé", marqué sur son revêtement.

Une piste orientée peut être définie par le cap de son axe, et les coordonnées (longitude, latitude, et altitude de son seuil). Les mots "amont" et "aval" se réfèrent à la direction d'atterrissage, aussi bien pour la piste orientée, que pour l'approche d'atterrissage.

Comme sur la figure 1, à partir des informations ou paramètres de vol 2 et de la "base de données terrain" 3, l'unité 4 réalise les calculs d'anti-collision qui lui permettent d'actionner une ou des alertes 51, le cas échéant. Ces alertes sont habituellement dénommées "caution" (avertissement) et "warning" (alarme).

Une unité 102 élabore la commande (état) d'inhibition de l'unité 4. Plus généralement, l'inhibition est applicable à toute fonction de Prédiction et Alerte de Collision (dite "CPA" pour "Collision Prediction and Alerting".

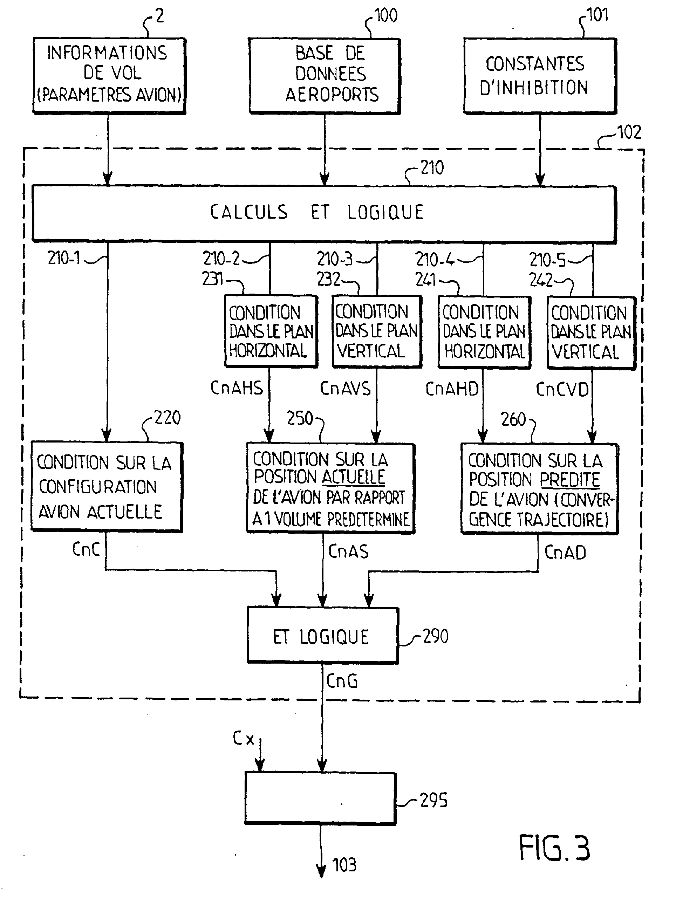

A cet effet, l'unité 102 reçoit (figure 3, en haut) d'une part les informations de vol de l'unité 2, d'autre part des informations issues de la base de données d'aéroport 100, ainsi que des informations formant "constantes d'inhibition", mémorisées en 101.

L'unité 102 comprend une unité 210, qui réalise des opérations de calcul et/ou logiques, afin de fournir des grandeurs de travail à 5 sorties, dans le mode de réalisation illustré, à savoir :

- une sortie 210-1, allant sur une unité 220, qui, à partir des grandeurs de travail qu'il reçoit, élabore une première condition CnC (sous-condition de configuration avion) relative à la configuration avion actuelle,
- une sortie 210-2, allant sur une unité 231, qui fournit une seconde condition CnAHS (sous-condition statique horizontale), qui est une condition relative à l'approche, considérée dans le plan horizontal et de façon statique (position de l'avion),
- une sortie 210-3, allant sur une unité 232, qui fournit une troisième condition CnAVS (sous-condition statique verticale), qui est une condition d'approche statique en vertical,
- une sortie 210-4, allant sur une unité 241, qui fournit une quatrième condition CnAHD (sous-condition dynamique horizontale), qui est une condition d'approche considérée dans le plan horizontal et de façon dynamique, et
- une sortie 210-5, allant sur une unité 242, qui fournit une cinquième condition CnAVD (sous-condition dynamique verticale), qui est une condition d'approche dynamique en vertical.

Pour alléger l'exposé, les sous-conditions seront ci-après appelées simplement "conditions".

L'unité 250 fournit une condition statique générale CnAS, par un ET logique sur la condition statique horizontale CnAHS et la condition statique verticale CnAVS (relation I). De même, l'unité 260 fournit une condition dynamique générale CnAD, par un ET logique sur la condition dynamique horizontale CnAHD et la condition dynamique verticale CnAVD/(relation II).

L'unité 290 réalise un ET logique des trois conditions CnC, CnaS et CnAD, pour définir une condition globale d'inhibition CnG (relation III). En option (trait allégé sur le dessin), l'organe 295 réalise un traitement supplémentaire, comme on le verra plus loin.

La sortie de l'unité 290 équivaut à élaborer une condition globale d'approche CnA par un ET logique de la condition statique générale CnAS et de la condition dynamique générale CnAD (relation IV), puis à définir la condition globale d'inhibition CnG par un ET logique des conditions CnC et CnA (relation V).

On peut aussi considérer que la condition globale d'approche CnA est un ET logique sur les quatre sous-conditions d'approche (relation VI), ou bien qu'elle est un ET logique (relation VII) sur une condition d'approche horizontale CnAH et une condition d'approche verticale CnAV, elles-mêmes définies par les relations VIII.

Ces deux présentations différentes permettent de faire :

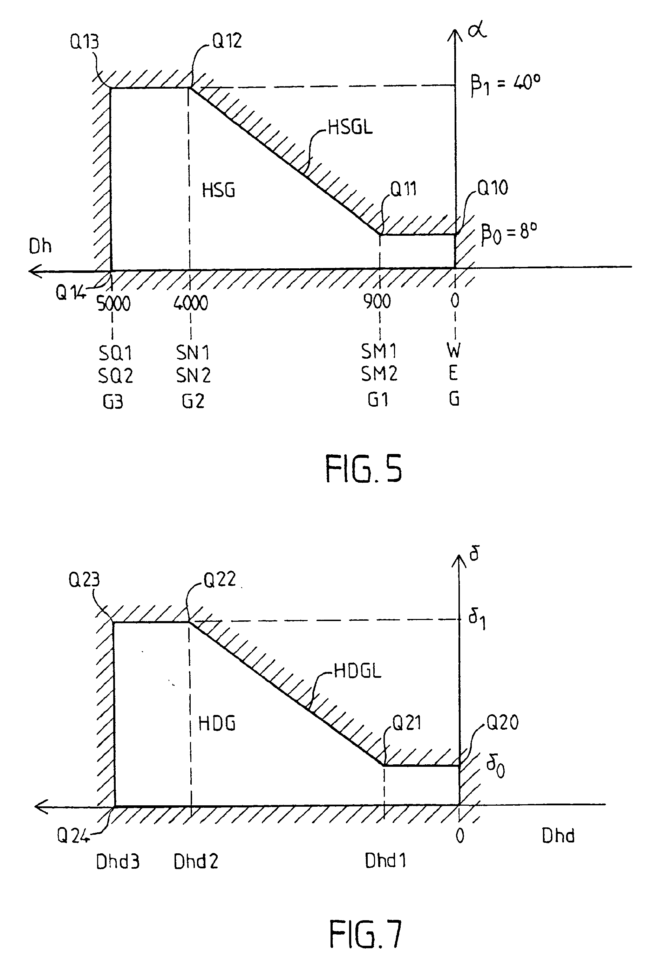

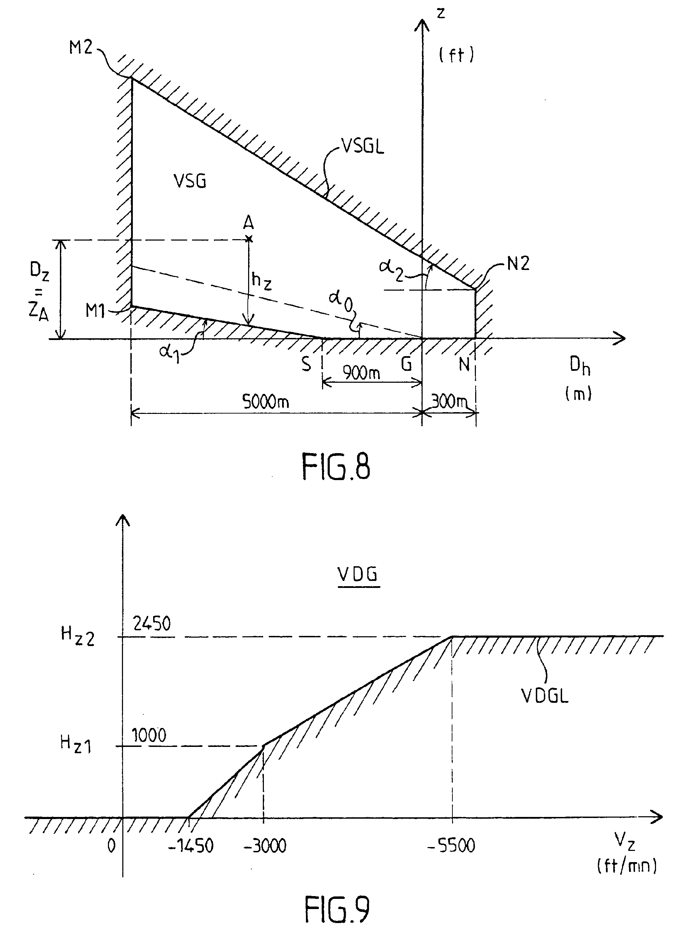

- d'une part, une "analyse avion", distinguant ce qui relève de la position de l'avion (figures 5 et 8), ou bien de sa prédiction de trajectoire (figures 7 et 9),
- d'autre part, une "analyse sol", distinguant le "plan vertical" (projection de la trajectoire de l'avion dans un plan vertical) du plan horizontal (projection de la trajectoire de l'avion dans un plan horizontal).

Par ailleurs, le découpage de la figure 3 en unités est de nature fonctionnelle. En pratique, tout ou partie des opérations apparaissant à l'intérieur du cadre 102 pourront être réalisées par une même unité de traitement et de calcul, qui travaille répétitivement. Celle-ci doit être apte à faire des calculs d'ordre géométriques et trigonométriques, ainsi qu'à traiter les conditions logiques. On utilise, par exemple, à cet effet un micro-ordinateur de type POWER PC 603, avec des programmes écrits, par exemple, en langage C de type C.ANSI, le cas échéant avec l'assistance d'un processeur d'appoint de type DSP.

On décrira maintenant la genèse de chacune des conditions.

La condition de configuration avion CnC indique que l'avion est matériellement prêt à atterrir. Selon les normes actuelles, elle peut, par exemple, comprendre, en ET logique (relation X) :

- une condition CnCl portant sur la sortie du train d'atterrissage ("gear down"), et

- une condition CnC2 indiquant que les volets d'ailes sont sortis ("full flaps "), de préférence en OU logique avec un état CnC3, autorisant d'outrepasser la condition CnC2, par exemple sur demande du pilote ("flaps override").

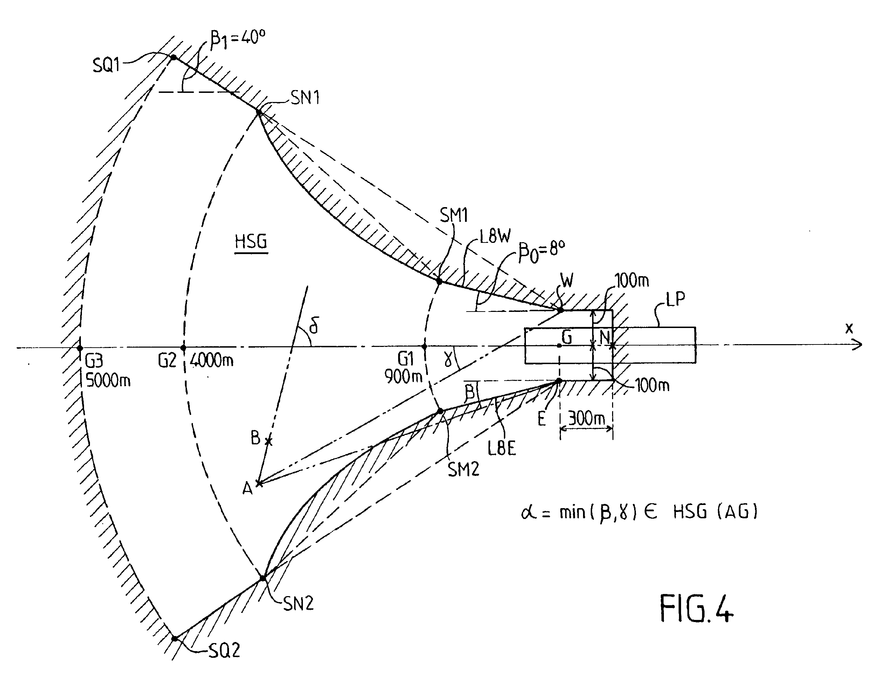

Selon l'invention, la condition statique horizontale CnAHS est définie à l'aide d'un secteur d'approche horizontal SHA, dont un exemple préférentiel est donné sur la figure 4.

L'information sur la piste orientée d'atterrissage prévue doit être rendue accessible au dispositif d'inhibition. On sait qu'une piste d'atterrissage est généralement horizontale, ou presque. On appelle donc ici plan horizontal le plan de la piste d'atterrissage (le cas échéant, le plan moyen de la piste d'atterrissage).

Une détermination automatique de la piste orientée concernée peut être obtenue à partir de l'un et/ou l'autre des deux critères suivants, appliqués en dessous d'un seuil de distance égal par exemple à 5000 mètres (distance G-G3):

- on prend la piste mémorisée dont l'axe est le plus proche de la projection horizontale du vecteur vitesse instantané,

ou d'une représentation, par exemple par moyenne, de celui-ci,

- on prend la piste orientée dont le seuil de piste est le plus proche de l'avion en projection horizontale.

En variante, dans un avion équipé d'un système de gestion de vol (FMS pour "Flight Management System"), on prend dans ce système l'information sur la piste orientée d'atterrissage qui est prévue. Une autre variante consiste en ce que le pilote indique cette piste à l'électronique de bord de l'aéronef, puisque, lorsqu'il se prépare à atterrir, le pilote reçoit toujours verbalement la désignation de la piste orientée d'atterrissage prévue pour lui.

A partir de là, le dispositif selon l'invention peut, dans la mémoire 100, isoler les coordonnées de la piste d'atterrissage considérée. Ainsi, les coordonnées et la forme de cette piste sont celles illustrées en LP sur la figure 4.

On désigne par G un point de référence de la piste pour la définition du secteur d'approche horizontal SHA. Il est souhaité que ce point G corresponde au point d'aboutissement au sol de la trajectoire d'atterrissage. Dans le mode de réalisation décrit, à titre d'exemple, ce point G est, par ordre de priorité :

- le point visé dit "glideslope position" extrait de la mémoire 100, s'il existe, et

- le point de seuil décalé ou "displaced threshold" extrait de l'unité 100, s'il existe,

- un point décalé de 300 mètres dans le sens de l'atterrissage, à partir du seuil de piste extrait de l'unité 100.

A partir de ce point G, on définit alors deux points W et E, de la manière suivante (dans le mode de réalisation décrit):

- la longueur du segment WE vaut 200 m (tolérance latérale de position),
- le segment WE est perpendiculaire à l'axe de la piste,
- le point G est le milieu du segment WE.

On définit en outre un point N comme suit : le point N est sur l'axe de la piste, à 300 m du point G vers l'aval (sens de l'atterrissage de l'avion).

L'homme du métier comprendra que ces points peuvent être déterminés à l'aide de traitements mathématiques simples.

Sur la figure 4, à droite du segment WE, le secteur d'approche comprend une zone rectangulaire de longueur WE, qui va jusqu'au point N.

On définit maintenant la forme du secteur d'approche vers la gauche du segment WE, selon la projection horizontale de la figure 4.

L'avion est au point A. On note respectivement $\beta$ et $\gamma$ les angles que font les segments AE et AW avec l'axe GN de la piste (ou toute parallèle à celui-ci). On note a le plus petit des deux angles $\beta$ et $\gamma$. On note $D_h$ la projection de AG sur le plan horizontal passant par G.

La figure 5 est un graphe ayant la distance horizontale $D_h$ en abscisse, et l'angle $\alpha$ en ordonnée. Pour correspondre aux conditions d'un atterrissage (et à la figure 4), les abscisses sont décroissantes de la gauche vers la droite.

Un contour HSGL est défini par les points Q10 à Q14, et l'origine O. L'intérieur de ce contour est un domaine fermé HSG (le côté extérieur est distingué par des hachures courtes).

La condition CnAHS est vraie si l'angle a appartient au domaine HSG de la figure 5. L'intervalle des valeurs de $\alpha$ situées dans le domaine HSG est une fonction de la distance horizontale $D_h$. Ceci est exprimé par les relations XI.

La forme du secteur d'approche horizontal SHA découle de celle de ce domaine ou gabarit HSG. On la décrit ci-après, en sens inverse de la direction d'atterrissage.

Le contour HSGL de la figure 5 comporte un palier horizontal Q10-Q11, de 0 à 900 mètres. Cela définit les parties suivantes du contour du secteur d'approche (figure 4):

- à gauche du point w, un segment W-SM1, qui s'appuie sur une ligne L8W, laquelle diverge vers le haut d'un angle $\beta_0$, valant ici 8°, par rapport à l'axe de piste GN.
- à gauche du point E, un segment E-SM2, qui s'appuie sur une ligne L8E, laquelle diverge vers le bas d'un angle $\beta_0$, valant ici également 8°, par rapport à l'axe de piste GN.
- dans l'axe de piste, un segment G-G1.

Pour faciliter la compréhension, ces trois jeux de points (en haut, en bas et dans l'axe) sont rappelés sous les limites correspondantes du gabarit de la figure 5.

Ensuite, le contour HSGL de la figure 5 possède une zone croissante Q11-Q12 (ici linéaire), pour les valeurs de $\alpha$ qui vont de $\beta_0 = 8°$ à $\beta_1 = 40°$. A cela correspondent les parties suivantes du contour du secteur d'approche (figure 4):

- segment haut curviligne SM1-SN1, dont la concavité est tournée vers le haut,
- segment bas curviligne SM2-SN2, dont la concavité est tournée vers le bas,
- dans l'axe de piste, un segment G1-G2.

On notera que l'inclinaison moyenne des segments curvilignes SM1-SN1 et SM2-SN2 est supérieure à $\beta_o = 8°$.

Enfin, le contour HSGL de la figure 5 possède un autre palier Q12-Q13, pour $\beta_1 = 40°$, et les abscisses de 4000 à 5000 mètres. Dans le secteur d'approche (figure 4) cela correspond à:

- en haut, un segment SN1-SQ1, qui diverge selon l'angle $\beta_1$ par rapport à une parallèle à l'axe de piste,
- en bas, un segment SN2-SQ2, qui diverge selon l'angle $\beta_1$ par rapport à une parallèle à l'axe de piste, mais vers le bas
- dans l'axe de piste, un segment G2-G3.

Le contour HSGL est remarquable par sa partie intermédiaire décroissante avec la diminution de la distance $D_h$ de l'avion au point choisi G. A noter que le second palier est optionnel; le gabarit peut se terminer sur sa zone décroissante Q11-Q12.

Par ailleurs, le secteur d'approche SHA tel que décrit est symétrique par rapport à l'axe de piste. Il est concevable de le prévoir asymétrique, du moins pour certains aéroports, en modifiant ou décalant le gabarit d'un côté, et/ou en plaçant les points W et E dissymétriquement par rapport à G.

Les paliers et la montée rectiligne de la figure 5 correspondent à des conditions simples à calculer. Et il en résulte pour le secteur d'approche des contours géométriquement simples, droits pour la plupart. L'homme du métier comprendra que l'on peut réaliser des contours plus complexes équivalents, en augmentant le cas échéant la puissance de calcul.

Le secteur d'approche horizontal permet de vérifier que, dans le plan horizontal, les positions successives de l'avion convergent vers la piste d'atterrissage.

Ainsi, la condition CnAHS peut être définie à partir des paramètres suivants:

- position A de l'avion,
- direction de l'axe de piste et point G,
- "constantes" définissant le gabarit de la figure 5, par exemple par ses quatre points de transition Q10 à Q13, ou bien sous forme d'une table HSG($D_h$), échantillonnée avec un pas suffisamment fin sur la distance $D_h$.

A partir de là, il faut calculer les positions des points W et E, la distance $D_h$, et l'angle $\alpha$, tiré de $\beta$ et $\gamma$. Ces grandeurs calculées sont obtenues dans l'unité 210, qui transmet à l'unité 231 les valeurs $D_h$ et $\alpha$, ainsi que les constantes définissant le gabarit de la figure 5, ou mieux la valeur en ordonnée du gabarit pour la valeur courante de $D_h$.

En ce qui concerne la limite du secteur d'approche vers la gauche, elle est définie par le contour SQ1-G3-SQ2. Cela correspond au fait que la distance $D_h$ de l'avion au point G doit être inférieure à un seuil, fixé ici à 5000 m.

Il apparaît donc qu'à gauche du segment WE, le secteur d'approche horizontal SHA est entièrement défini par le gabarit HSG de la figure 5. En variante, on pourrait paramétrer directement le secteur SHA en fonction de $D_h$.

On s'intéressera maintenant à la condition d'approche horizontale dynamique, notée CnAHD. Cette condition est, dans le mode de réalisation préférentiel décrit, un peu plus complexe que la précédente.

En effet, on tient compte maintenant, non seulement de la position actuelle A de l'avion, mais aussi d'une prédiction de sa trajectoire future dans le plan horizontal. Cette prédiction est définie en l'espèce par un point B, à partir d'un vecteur AB, tel que :

- la longueur ou norme du vecteur AB est égale à la vitesse horizontale ("ground speed") de l'avion, et
- le sens ou la direction DIR du vecteur AB est égal à la route ("track angle") de l'avion.

On note alors $\delta$ l'angle entre le vecteur AB et l'axe de piste orientée (figure 4).

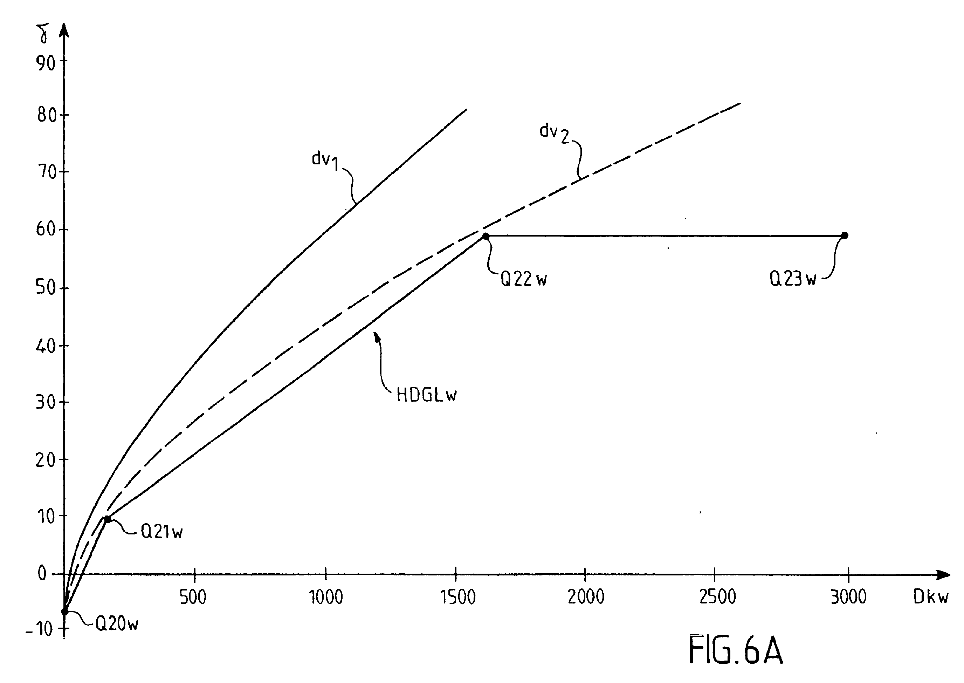

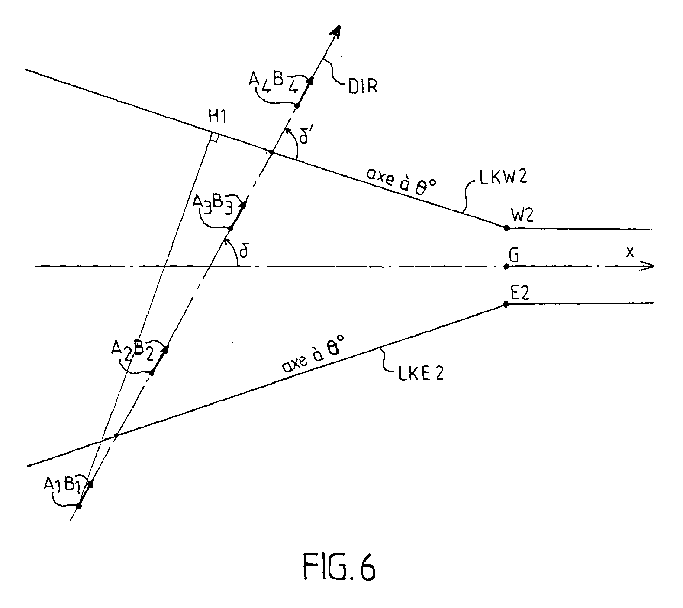

Par ailleurs, on définit un secteur de convergence, d'une manière en partie semblable à la définition du secteur d'approche horizontal. Sur la figure 6, deux points W2 et E2 sont définis (comme l'étaient W et E) de part et d'autre de G, perpendiculairement à l'axe de piste. On note LKW2 une frontière comprenant une demi-droite partant de W2 vers la gauche et divergeant de l'axe de piste d'un angle $\theta$, égal ici à 8°, prolongée au besoin à droite de W2 par une parallèle à l'axe de piste. On note de même LKE2 une demi-droite partant de E2 vers la gauche et divergeant de l'axe de piste d'un angle $\theta$, prolongée au besoin à droite de W2 par une parallèle à l'axe de piste. Le secteur de convergence est la zone comprise entre LKW2 et LKE2. De préférence, selon le mode de réalisation décrit, on a E2 = E, W2 = W, et $\theta = \beta_o$.

On note Dkw la distance entre A et la demi-droite LKW2, et Dke la distance entre A et la demi-droite LKE2.

On suppose d'abord que $\delta$ est compris entre 0° et 180° (cas de la figure 6). Si A est au delà de la demi-droite LKW2 (cas $A_4B_4$), alors, on interdit toute inhibition, par exemple en forçant Dkw à une valeur impossible, comme -1. On présume ainsi que, dans ce cas, l'avion est dans l'incapacité d'atterrir correctement.

Symétriquement, on suppose maintenant que 6 est compris entre 180° et 360° (sur la figure 6, on remplacerait la direction DIR par son symétrique par rapport à l'axe de piste orientée). Si A est en deçà (au dessous sur la figure) de la demi-droite LKE2, alors on interdit toute inhibition, par exemple en forçant Dke à une valeur impossible, comme -1.

On s'intéresse maintenant aux autres cas.

On considère par exemple la demi-droite LKW2. On suppose que l'avion se dirige vers elle depuis le bas de la figure 6. La Demanderesse a observé qu'il est possible de définir, en fonction de l'angle $\delta$ (en pratique, de $\delta + \theta$), une distance Dkw à respecter, si l'on veut être sûr que l'avion puisse virer vers la piste en restant en dessous de la demi-droite LKW2. Cette distance tient compte avantageusement du temps mis par l'avion pour s'incliner en roulis avant de virer. On obtient par exemple (figure 6A) la courbe $dv_1$ (trait plein) pour une vitesse horizontale avion de 70 m/s environ, et la courbe $dv_2$ (trait brisé) pour une vitesse horizontale avion de 90 m/s environ. Les courbes $dv_1$ et $dv_2$ ont l'allure d'une fonction ArcSinus.

Bien qu'il soit envisageable d'utiliser ces courbes elles-mêmes, la Demanderesse a observé que l'on peut approcher la limite la plus stricte, ici $dv_2$, par trois segments de droite, Q20w-Q21w, Q21w-Q22w, et Q22w-Q23w, formant ensemble la frontière HDGLw, située en dessous de $dv_2$, donc plus stricte encore.

Il suffit alors de calculer Dkw et de vérifier qu'elle se situe au dessous de la courbe HDGLw, en fonction de 6. On fait de même, symétriquement, pour Dke et une courbe HDGLe. L'inhibition est possible si les deux conditions sont vérifiées.

La Demanderesse a également observé qu'il est possible de simplifier encore les calculs, en ne considérant qu'une seule distance, notée Dhd. Les éléments qui précèdent sont modifiés comme suit:

- si $\delta$ est compris entre 0° et 180° (cas de la figure 6), et tant que A demeure en deçà (au dessous sur la figure) de la demi-droite LKW2 (cas $A_1B_1, A_2B_2, A_3B_3$), Dhd est prise égale à la distance Dkw entre A et la demi-droite LKW2;
- si $\delta$ est compris entre 180° et 360° (sur la figure 6, on remplacerait la direction DIR par son symétrique par rapport à l'axe de piste orientée), et tant que A demeure au delà (au dessus sur la figure) de la demi-droite LKE2, Dhd est prise égale à la distance Dke entre A et la demi-droite LKE2.

Comme l'indique la relation XII, la condition d'approche horizontale dynamique CnAHD est alors définie par le fait que l'angle $\delta$ appartient au domaine ou gabarit HDG (figure 7), lui-même fonction de la distance ou "marge à virer" Dhd, en abscisse. On note HDGL le contour de ce domaine.

La figure 7 est, comme la figure 5, établie avec des abscisses décroissantes de la gauche vers la droite. Pour Dhd allant de 0 à Dhdl, la courbe comporte un palier Q20-Q21, de niveau $\delta_0$ proche de 0°. De Dhd1 à Dhd2, le contour HDGL comprend un segment Q21-Q22, ici rectiligne, qui croît avec Dhd. De Q22 à Q23, on a un autre palier de niveau $\delta 1 = 60°$, pour Dhd allant de Dhd2 à une valeur limite Dhd3 = 4000 mètres par exemple. Le contour HDG est fermé par la verticale Q23-Q24, l'axe des abscisses, et la verticale entre l'origine et Q20.

En pratique, et notamment selon les caractéristiques de l'avion, on pourra prendre Dhd1 = 75 à 150 mètres, Dhd2 = 900 à 2000 mètres, et le maximum Dhd3 = 4000 mètres par exemple.

Ainsi, on prédit la convergence de la trajectoire prévue vers l'axe de piste, avec une tolérance de part et d'autre de cet axe. La "rigueur" de la convergence demandée augmente lorsque l'avion s'approche de la piste. Plus précisément, la condition d'approche horizontale dynamique CnAHD permet de vérifier que, dans le plan horizontal, la composante de la vitesse de l'avion qui est transversale à l'axe de piste demeure compatible avec un retour à temps dans l'axe de piste.

Le fait de prévoir, à la place des courbes théoriques des deux côtés, un seul gabarit HDGL conforme à la figure 7, avec un palier aux faibles distances, de Q20 à Q21, revient à autoriser un "couloir" d'inhibition permise, de largeur Dhdl, du côté intérieur des lignes LKW2 et ou LKE2, pour $0 < \delta < \delta_0$. En effet, si l'avion est proche par exemple de LKW2 côté intérieur (Dhd < Dhd1), on autorise l'inhibition alors que $\delta > 0$ indique que l'avion tend à sortir du secteur de convergence; mais, si l'avion continue dans la même direction, il va passer de l'autre côté de LKW2, avec Dhd = -1 qui interdit l'inhibition. L'inhibition n'est donc durable que si l'avion reste dans le couloir, ou, mieux, se rapproche de l'axe de piste.

La condition CnAHD peut être définie à partir des paramètres suivants:

- comme précédemment, position A de l'avion, direction de l'axe de piste et point G,
- direction du vecteur AB, points W2 et E2, qui, ici, se confondent avec W et E,
- "constantes" définissant le gabarit de la figure 7, par exemple par ses quatre points de transition Q20 à Q23, ou bien sous forme d'une table HVG(Dhd), échantillonnée avec un pas suffisamment fin sur la distance Dhd.

La plupart de ces calculs sont semblables à ceux qui ont été déjà faits pour le secteur d'approche horizontal: points W2 et E2, et demi-droites LKW2 et LKE2. On en tire, suivant le cas de figure, la distance Dhd. De son côté, le calcul de l'angle 6 est de même nature que celui des angles $\beta$ et $\gamma$. Ces grandeurs calculées sont obtenues dans l'unité 210, qui transmet à l'unité 241 les valeurs Dhd et $\delta$, ainsi que les constantes définissant le gabarit de la figure 7, ou mieux la valeur en ordonnée du gabarit pour la valeur courante de Dhd.

On remarquera que la condition dynamique horizontale CnAHD décrite ci-dessus tient compte non seulement de données dynamiques (vitesse), mais aussi de données de position. On remarquera aussi que le secteur de convergence, dans l'exemple décrit, coïncide avec la partie SM1-W-E-SM2 du secteur d'approche horizontal qui est proche de la piste. La condition CnAHD contient donc au moins partiellement la condition CnAHS. Il est donc possible de définir d'autres combinaisons de ces deux conditions que celle ici proposée.

Il est maintenant fait référence à la figure 8, pour la condition d'approche verticale statique CnAVS.

On définit un point S, situé à 900 m en amont de G dans le sens de l'atterrissage (Figure 8). En outre, on définit un point N2, qui est situé 50 pieds (environ 15 mètres) au-dessus de N à la verticale. Cette hauteur de 50 pieds est la tolérance de l'erreur de position verticale (pour l'inhibition).

On définit enfin trois angles $\alpha0$, $\alpha1 \leq \alpha0$, et $\alpha2 \geq \alpha0$, avec:

- $\alpha0$ = angle de pente standard d'atterrissage pour une piste orientée, pris par défaut égal à 3°,
- $\alpha1$ = angle de pente minimum acceptable d'atterrissage, pris ici par défaut égal à l'angle mini acceptable sans alerte pour une approche sur "glideslope" (pente de descente), soit $\alpha l = 2,5°$,
- $\alpha2$ = angle de pente maximale acceptable d'atterrissage, pris par défaut à 4,5°, ou bien à 8° si des approches à forte pente sont possibles pour l'aéroport concerné (information mémorisée dans la base de données d'aéroports).

Le secteur d'approche dans le plan vertical est alors défini par le gabarit de la figure 8. Son contour VSGL est délimité:

- par un segment S-N au niveau du sol, en passant par G,
- à droite, par la verticale N-N2,
- en haut, par la ligne N2-M2 qui monte vers le gauche selon l'angle $\alpha2$,
- en bas vers la gauche, par une ligne qui part du point S, selon un angle $\alpha1$, jusqu'en M1,
- verticalement à gauche, par une ligne verticale M1-M2 située ici à 5000 m à gauche du point G.

Le domaine situé à l'intérieur de ce contour est noté VSG. Il est lui-même le secteur d'approche vertical. Son étendue verticale est fonction de la distance $D_h$, qui est la projection de AG sur le plan horizontal passant par G. On note $z_A$ la hauteur de l'avion au-dessus du plan horizontal passant par G, avec $z_A = D_Z$.

La condition CnAVS correspond alors au fait que $z_A$ se situe à l'intérieur du domaine VSG, lui-même fonction de $D_h$, comme l'indique la relation XIII.

Le secteur d'approche vertical permet de vérifier que, dans le plan vertical, les positions successives de l'avion convergent vers la piste d'atterrissage, sans passer prématurément trop près du sol.

Ainsi, la condition CnAVS peut être définie à partir des paramètres suivants:

- comme précédemment, position A de l'avion, direction de l'axe de piste et point G,
- point S,
- "constantes" définissant le gabarit de la figure 8, par exemple de l'une des manières utilisées pour les gabarits précédents, ou de toute manière appropriée.

L'unité 210 transmet à l'unité 232 les valeurs $D_h$ (composante de AG dans le plan horizontal) et $D_Z$ (composante de AG dans le plan vertical). Elle transmet aussi la définition du gabarit de la figure 8, ou mieux la valeur en ordonnée du gabarit pour la valeur courante de $D_Z$.

On s'intéresse maintenant à la cinquième condition CnAVD, qui est une condition d'approche dynamique dans le plan vertical. Elle est définie à partir du secteur d'approche vertical.

Sur la figure 8, on note $h_Z$ la hauteur verticale (en pieds, conformément aux usages aéronautiques) entre le point A et la limite basse M1-S-N du contour VSGL. On note $V_Z$ la vitesse verticale ("vertical speed") de l'avion.

Le gabarit de la figure 9 exprime une limite en termes de hauteur $h_z$ en pied (ordonnée), en fonction de la vitesse $V_Z$ en pieds par minute (abscisse). Comme la vitesse de l'avion est négative lorsque l'avion se rapproche du sol, l'axe des abscisses est inversé.

Le contour VDGL du domaine d'inhibition est établi par l'axe horizontal en partant des vitesses positives décroissantes, jusqu'à - 1450 pieds/minute environ. A partir de là, un premier segment oblique monte vers la droite jusqu'au point $V_{Z1}$ = - 3000 pieds/minute et $h_{Z1}$ = 1000 pieds. Un second segment vertical, un peu moins ascendant, va du point précédent jusqu'au point $V_{Z2}$ = - 5500 pieds/minute pour $h_{Z2}$ = 2450 pieds. Le reste du contour est un palier horizontal à 2450 pieds. Le contour VDGL n'a pas de limite autre que physique (vitesse maximale de l'avion) ni à droite ni à gauche. Si nécessaire, on peut fixer une limite à 10000 pieds/mn.

Le domaine VDG, pour lequel une inhibition est possible, est le domaine ouvert situé au-dessus du contour en ligne brisée VDGL.

La condition CnAVD est alors définie par l'équation (XIV), exprimant que la vitesse $V_Z$ appartient au domaine VDG, qui est lui-même fonction de $h_Z$. (Contrairement aux gabarits précédents, on exprime ici l'abscisse $V_Z$ en fonction de l'ordonnée $h_Z$).

Les paramètres requis sont les mêmes que pour la condition CnAVD, plus la vitesse $V_Z$. L'unité 210 transmet à l'unité 242 les valeurs $h_Z$ et $V_Z$, ainsi que la définition du gabarit de la figure 9. En variante, l'unité 210 transmet à l'unité 242 la valeur $D_Z$, et l'unité 242 assure la prise en compte du segment de base oblique M1-S, d'inclinaison $\alpha 1$, pour en déduire $h_Z$.

La condition d'approche verticale dynamique CnAVD permet de vérifier que, dans le plan vertical, la vitesse de l'avion décroît suffisamment en fonction de la hauteur pour permettre à l'avion un atterrissage à vitesse verticale très faible, plutôt qu'une collision. C'est donc également un critère dynamique de convergence de la trajectoire de l'avion vers la piste d'atterrissage.

Comme déjà indiqué pour la condition CnAHD, la condition CnAVD peut être modifiée, pour en concevoir une variante qui soit une fonction différente de la vitesse et de la position dans le plan vertical.

Le mode de réalisation décrit ci-dessus correspond au cas où l'on veut inhiber automatiquement le dispositif d'alerte anti-collision sol que comporte l'avion. Il est particulièrement intéressant dans le cas où les moyens générateurs d'alerte (2,3,4,51) sont fondés sur la comparaison (4) entre des positions situées sur au moins une trajectoire prédite de l'avion et une représentation mémorisée dudit terrain, en particulier du fait que la représentation mémorisée (100) de la piste d'atterrissage (LP) est rapportée au même système de coordonnées que la représentation mémorisée (3) du terrain qui sert aux moyens générateurs d'alerte.

Mais les moyens décrits permettent, plus généralement, une détection automatique des conditions représentatives d'un atterrissage présumé correct, c'est-à-dire qui a toutes raisons de se dérouler normalement. Cette information pourrait faire l'objet d'un simple affichage au niveau du poste de pilotage, ou d'autres applications, différentes de l'inhibition d'alerte. Bien entendu, les paramètres touchant aux conditions de sécurité sont alors à ajuster en fonction de l'application.

On peut envisager différentes manières d'établir une condition globale d'inhibition d'alerte CnG, tirée des conditions élémentaires exprimées ci-dessus.

La Demanderesse préfère actuellement la manière la plus simple, qui équivaut à un ET logique des cinq conditions.

Autrement dit, les moyens d'inhibition (102) sont agencés pour inhiber l'alerte lorsque l'ensemble des conditions prévues sont réunies.

De préférence, la condition d'inhibition CnG est évaluée répétitivement en permanence, à une cadence suffisamment rapide, par exemple typiquement toutes les 0,5 secondes. Cependant, on peut limiter ce calcul répétitif au cas où une piste d'atterrissage est suffisamment proche.

L'inhibition cesse dès que la condition cesse d'être vérifiée. Toutefois, il est concevable de faire autrement, au moins dans certains cas. Autrement dit, ces moyens d'inhibition (102) n'inhibent l'alerte que tant que l'ensemble des conditions prévues sont réunies; toutefois, ces moyens d'inhibition (102) peuvent être figés à l'état d'inhibition, en fonction d'une condition spéciale (Cx) impliquant par exemple que l'altitude de l'avion est inférieure à un seuil choisi.

Ainsi, la Demanderesse envisage que l'inhibition perdure par exception (fonction 295), en présence d'une condition Cx qui dépend, par exemple, d'une ou plusieurs des conditions suivantes:

- la hauteur $D_Z$ reste inférieure à un seuil zmin, fixé par exemple à 90 pieds,
- la condition CnAHS reste vraie,
- une inhibition a déjà été obtenue au point 103 de la figure 3 au terme du cycle précédent de calculs.

Cette exception signifie que l'on maintient l'inhibition si l'avion est très bas. On peut y ajouter la condition que les phases déjà déroulées de l'atterrissage sont normales, et/ou que l'avion est resté dans le secteur d'approche horizontal.

Dans la description, le point G sert de référence à plusieurs titres. Il est naturellement possible de prendre un autre point comme référence. L'essentiel est de conserver une bonne définition du point nominal d'aboutissement au sol de la trajectoire d'atterrissage.

Les aspects dynamiques, relatifs à la convergence de la trajectoire de l'avion vers la piste d'atterrissage identifiée, sont très intéressants en eux-mêmes, indépendamment des aspects statiques, qu'il est envisageable de modifier, voire de supprimer. On observera à cet égard que les conditions dynamiques tirées des gabarits HDG et VDG peuvent suffire à indiquer une approche d'atterrissage correcte, au moins dans certains cas.

A côté de cela, le qualificatif "dynamique" implique que l'on prend en compte le mouvement de l'avion, notamment par sa vitesse instantanée; il n'exclut pas que l'on tienne compte aussi de sa position, comme c'est le cas pour la sous-condition dynamique horizontale dans l'exemple décrit.

De même, le traitement dans le plan horizontal peut être dissocié du traitement dans le plan vertical, bien que ces traitements interagissent partiellement.

La Demanderesse estime actuellement que les aspects statiques sont importants. Ainsi, un secteur d'approche en volume est défini par le secteur d'approche horizontal SHA, et le secteur d'approche vertical VSG. Toutefois, dans la mesure où il faudrait définir une priorité entre les deux, elle estime aussi que le plan horizontal est plus important que le plan vertical.

C'est ainsi que la sous-condition considérée actuellement comme la plus importante est la sous-condition statique horizontale CnAHS. Il est estimé préférable qu'elle soit blocante. On notera qu'elle joue un rôle privilégié dans l'unité 295 de la figure 3. Pour le reste, des variantes peuvent être envisagées.

Par ailleurs, le principe est que toutes les données d'aéroport sont contenues dans la base de données 100. Cependant, on peut admettre qu'en plus des "constantes", l'unité 101 contient des valeurs par défaut pour le cas où des données manqueraient ou seraient incorrectes dans la base de données 100, par exemple en ce qui concerne la géométrie de la piste; l'unité 101 peut également contenir un ou des jeux de valeurs standard, désignables individuellement par des codes, pour la géométrie de la piste notamment.

Il est également possible de désigner dans la base de données aéroports un ou des secteurs d'approche standard prédéfinis, auxquels des aéroports particuliers feraient exception, et se verraient affecter des secteurs d'approche spécifiques, définis en détail par leur gabarit et/ou leur contour. En particulier, les points W et E, ainsi que W2 et E2 peuvent être placés de façon dissymétrique par rapport au point G.

Les capacités propres à chaque type d'avion peuvent être prises en compte au niveau de ceux des paramètres et constantes de l'invention qui sont liés à la vitesse d'approche, directement ou indirectement.

Au lieu d'être stockée dans la base de données, une partie au moins des "informations d'aéroport" peut être transmise à l'avion peu avant l'atterrissage. Ceci convient notamment au cas des porte-avions et/ou des hydravions.

Dans l'exemple décrit apparaissent de nombreux paramètres et constantes pour lesquels sont données des valeurs précises. Les valeurs indiquées sont celles considérées comme actuellement préférentielles, compte-tenu des études menées par la Demanderesse. Ces paramètres sont cependant susceptibles d'évoluer, notamment en fonction des normes applicables, du type d'avion concerné, et des conditions d'approche des pistes.

Annexe de Formules

Notations: ∩ désigne la fonction logique ET
U désigne la fonction logique OU

$$CnAS = CnAHS \cap CnAVS \qquad (I)$$

$$CnAD = CnAHD \cap CnAVD \qquad (II)$$

$$CnG = CnC \cap CnAS \cap CnAD \qquad (III)$$

$$CnA = CnAS \cap CnAD \qquad (IV)$$

$$CnG = CnC \cap CnA \qquad (V)$$

$$CnA = CnAHS \cap CnAHD \cap CnAVS \cap CnAVD \qquad (VI)$$

$$CnA = CnAH \cap CnAV \qquad (VII)$$

$$\left\{ \begin{array}{l} CnAH = CnAHS \cap CnAHD \\ CnAV = CnAVS \cap CnAVD \end{array} \right. \qquad (VIII)$$

$$CnC = CnC1 \cap ( CnC2 \cup CnC3 ) \qquad (X)$$

$$\left\{ \begin{array}{l} \alpha = \min(\beta, \gamma) \\ CnAHS = ( \alpha \in HSG(D_h) ) \end{array} \right. \qquad (XI)$$

$$CnAHD = ( \delta \in HDG(Dhd) ) \qquad (XII)$$

$$CnAVS = ( z_A \in VSG(D_h) ) \qquad (XIII)$$

$$CnAVD = ( V_z \in VDG(h_z) ) \qquad (XIV)$$

11

**EP 0 989 386 B1**

**Revendications**

1.  Dispositif d'aide à l'atterrissage, comprenant des moyens de traitement (102), qui reçoivent d'une part des données de trajectoire de l'avion (2), d'autre part des données sur la position d'au moins une piste d'atterrissage (100), **caractérisé en ce que** les moyens de traitement comprennent des moyens de calcul (102) aptes à fournir un signal d'état (CnA) basé au moins en partie sur :

    - une condition d'approche statique (CnAS), fonction des données de trajectoire et des données de piste et exprimant l'appartenance de la position actuelle de l'avion (2) à un secteur d'approche (HSG, VSG), le secteur d'approche étant défini et délimité par rapport à une piste d'atterrissage (LP), et
    - une condition d'approche dynamique (CnAD), fonction de la tendance d'une prédiction de trajectoire basée sur la route et la vitesse actuelle de l'avion (2) à rester dans un secteur de convergence (HDG, VDG), le secteur de convergence étant défini et délimité par rapport à une piste d'atterrissage (LP) de sorte que, au sein de ce secteur de convergence, la composante de la vitesse de l'avion selon un axe transversal à un axe de piste est compatible avec un retour à temps dans ledit axe de piste.

2.  Dispositif selon la revendication 1, **caractérisé en ce que** la piste d'atterrissage est définie par une représentation mémorisée (100)

3.  Dispositif selon la revendication 1, **caractérisé en ce que** les données sur la position de la piste d'atterrissage comprennent une représentation d'un point de référence (G), en tant que point nominal d'aboutissement au sol de la trajectoire d'atterrissage, avec, en correspondance, la direction (GN) de l'axe de piste dans le sens d'atterrissage, **en ce que** les moyens de calcul sont agencés pour définir deux points auxiliaires (W,E), situés à des distances choisies de part et d'autre du point de référence (G), sur une droite transversale à ladite piste identifiée et passant par le point de référence G, et **en ce que** le secteur d'approche (HSG) est délimité latéralement par deux lignes (W-SM1-SN1-SQ1;E-SM2-SN2-SQ2) qui partent respectivement des deux points auxiliaires (W,E), et s'évasent de part et d'autre de l'axe de piste en s'éloignant de la piste d'atterrissage, jusqu'à une distance maximale par rapport au point de référence (G).

4.  Dispositif selon la revendication 3, **caractérisé en ce que** les moyens de calcul sont agencés pour calculer les angles $(\beta,\gamma)$ entre l'axe de la piste et les droites (AE, AW) joignant la position actuelle (A) de l'avion aux deux points auxiliaires (W, E), respectivement, tandis que le secteur d'approche (HSG) comprend des points pour lesquels le plus faible des deux angles $(\beta,\gamma)$ est inférieur à une courbe limite angle/distance (HSGL), dont une partie est décroissante avec la diminution de la distance ($D_h$) de l'avion au point de référence (G).

5.  Dispositif selon la revendication 4, **caractérisé en ce que** la décroissance de la courbe limite (HSGL) va d'environ 40° pour une distance d'environ 4000 mètres à environ 8° pour une distance d'environ 900 mètres.

6.  Dispositif selon l'une des revendications 3 à 5, **caractérisé en ce que** le secteur d'approche (HSG) comprend en outre une zone sensiblement rectangulaire dont un côté est défini par les deux points auxiliaires (W,E), et dont le côté opposé passe par un point (N) situé à distance choisie en aval du point de référence (G) sur l'axe de piste.

7.  Dispositif selon la revendication 3, **caractérisé en ce que** les moyens de calcul sont agencés pour définir deux points auxiliaires (W2, E2), situés à des distances choisies de part et d'autre du point de référence (G), sur une droite transversale à ladite piste identifiée et passant par le point de référence G, pour calculer l'angle $(\delta)$ entre la projection horizontale du cap d'approche de l'avion (AB) et l'axe de la piste (GN), et pour déterminer deux frontières latérales (LKW2,LKE2)du secteur de convergence, qui partent respectivement des deux points auxiliaires (W2,E2), et s'évasent de part et d'autre de l'axe de piste en s'éloignant de la piste d'atterrissage, ainsi qu'une marge (Dhd), tirée de la distance entre la position horizontale de l'avion et la plus éloignée des deux frontières, sauf si l'avion s'éloigne simultanément des deux frontières, et **en ce que** la tendance d'une prédiction de trajectoire à rester latéralement dans le secteur de convergence (HDG), est assimilée au fait que ledit angle $(\delta)$ entre la projection horizontale du cap d'approche et l'axe de piste est inférieur à une courbe limite cap/marge (HDGL), courbe limite dont une partie intermédiaire est décroissante avec la diminution de ladite marge.

8.  Dispositif selon la revendication 7, **caractérisé en ce que** le cap d'approche est défini à partir d'un vecteur directeur (AB) partant de la position actuelle de l'avion (A) avec une mesure et une direction tirées de la vitesse horizontale instantanée de l'avion, et de l'angle $(\delta)$ que forme ce vecteur (AB) avec l'axe (GN) de la piste.

**9.** Dispositif selon la revendication 3, **caractérisé en ce que** les moyens de calcul sont agencés pour définir deux autres points auxiliaires (S,N2), situés l'un sur l'axe de piste à une distance choisie en amont du point de référence (G), l'autre à une distance choisie en aval du point de référence (G) et à une hauteur choisie, et **en ce que** la délimitation verticale du secteur d'approche comprend les points dont la distance en amont du point de référence (G) est inférieure à un seuil, et qui se trouvent entre une droite de pente ($\alpha_1$) décroissante vers l'aval passant par le premier point (S) et une droite de pente ($\alpha_2$) décroissante vers l'aval et passant par le second point (N2), la seconde pente ($\alpha_2$) étant supérieure à la première ($\alpha$1).

**10.** Dispositif selon la revendication 9, **caractérisé en ce que** les moyens de calcul sont agencés pour établir la vitesse verticale de l'avion vers le sol, et la hauteur résiduelle de l'avion au dessus de la frontière basse de la délimitation verticale du secteur d'approche, et **en ce que** la tendance d'une prédiction de trajectoire à rester verticalement dans le secteur de convergence (VDG) est assimilée au fait que ladite hauteur résiduelle est supérieure à une courbe limite hauteur/vitesse, courbe limite dont une partie intermédiaire est décroissante avec la diminution de la vitesse vers le sol.

**11.** Dispositif selon l'une des revendications précédentes, **caractérisé en ce que** le signal d'état comprend une condition sur la configuration de l'avion (CnC).

**12.** Dispositif selon la revendication 11, **caractérisé en ce que** la condition sur la configuration de l'avion (CnC) comprend une condition (CnC1) portant sur la sortie du train d'atterrissage, et au moins une condition (CnC2,CnC3) relative aux volets.

**13.** Dispositif selon l'une des revendications précédentes, comprenant des moyens (2,3,4,51) capables d'engendrer une alerte en cas d'imminence d'une collision avion/sol, et des moyens (102) capables d'inhiber certaines au moins des alertes en présence d'un signal d'inhibition (CnG), **caractérisé en ce que** ce signal d'inhibition (CnG) est tiré du signal d'état (CnA).

**Claims**

**1.** Landing assistance apparatus, comprising processing means (102) which receive, on the one hand, trajectory data for the aircraft (2), and on the other hand data as to the position of at least one landing strip (100), **characterised in that** the processing means comprise computing means (102) adapted to supply a condition signal (CnA) based at least partly on:

- a static approach condition (CnAS), as a function of the trajectory data and runway data and expressing the allocation of the current position of the aircraft (2) to an approach sector (HSG, VSG), the approach sector being defined and delimited relative to a landing strip (LP), and
- a dynamic approach condition (CnAD), as a function of the tendency of a predicted trajectory based on the route and current speed of the aircraft (2) to remain in a convergence sector (HDG, VDG), the convergence sector being defined and delimited relative to a landing strip (LP), so that, within this convergence sector, the component of the velocity of the aircraft along an axis transverse to a strip axis is compatible with a return in time to said strip axis.

**2.** Apparatus according to claim 1, **characterised in that** the landing strip is defined by a stored representation (100).

**3.** Apparatus according to claim 1, **characterised in that** the data relating to the position of the landing strip comprise a representation of a reference point (G), as a nominal touchdown point of the landing trajectory, with, in correspondence therewith, the direction (GN) of the strip axis in the direction of landing, **in that** the computing means are arranged so as to define two auxiliary points (W, E), located at selected distances on either side of the reference point (G), on a line transverse to said identified runway and passing through the reference point G, and **in that** the approach sector (HSG) is laterally bounded by two lines (W-SM1-SN1-SQ1; E-SM2-SN2-SQ2) which start, respectively, from two auxiliary points (W, E), and widen out on either side of the strip axis as they get further away from the landing strip, up to a maximum distance from the reference point (G).

**4.** Apparatus according to claim 3, **characterised in that** the computing means are designed to calculate the angles ($\beta$, $\gamma$) between the axis of the strip and the straight lines (AE, AW) connecting the current position (A) of the aircraft to the two auxiliary points (W, E), respectively, while the approach sector (HSG) comprises points for which the smallest of the two angles (β, γ) is less than a maximum angle/distance curve (HSGL), part of which decreases with the reduction in the distance (Dh) of the aircraft from the reference point (G).

5. Apparatus according to claim 4, **characterised in that** the decrease in the maximum curve (HSGL) goes from about 40° for a distance of about 4000 metres to about 8° for a distance of about 900 metres.

6. Apparatus according to one of claims 3 to 5, **characterised in that** the approach sector (HSG) further comprises a substantially rectangular zone, one side of which is defined by the two auxiliary points (W, E), and the opposite side of which passes through a point (N) located at a selected distance downstream of the reference point (G) along the strip axis.

7. Apparatus according to claim 3, **characterised in that** the computing means are designed to define two auxiliary points (W2, E2), located at selected distances on either side of the reference point (G), on a straight line transverse to said identified strip and passing through the reference point G, to calculate the angle (δ) between the horizontal projection of the approach heading of the aircraft (AB) and the axis of the strip (GN), and to determine two lateral boundaries (LKW2, LKE2) of the convergence sector, which start, respectively, from the two auxiliary points (W2, E2) and widen out on either side of the strip axis as they get further away from the landing strip, and a margin (Dhd), taken from the distance between the horizontal position of the aircraft and the furthest of the two boundaries, except when the aircraft is moving away from both boundaries simultaneously, and **in that** the tendency of a predicted trajectory to remain laterally within the convergence sector (HDG) is likened to the fact that said angle (δ) between the horizontal projection of the approach heading and the strip axis is less than a limiting heading/margin curve (HDGL), an intermediate part of said limiting curve decreasing with the reduction in said margin.

8. Apparatus according to claim 7, **characterised in that** the approach heading is defined on the basis of a steering vector (AB) starting from the current position of the aircraft (A) with a measurement and a direction drawn from the momentary horizontal velocity of the aircraft, and of the angle (δ) formed by this vector (AB) with the axis (GN) of the strip.

9. Apparatus according to claim 3, **characterised in that** the computing means are designed so as to define two other auxiliary points (S, N2), one of which is located on the strip axis at a selected distance upstream of the reference point (G), while the other is located at a selected distance downstream of the reference point (G) and at a selected height, and **in that** the vertical delimiting of the approach sector comprises the points whose distance upstream from the reference point (G) is less than a threshold, and which are situated between a straight line of gradient (α1) decreasing in the downstream direction and passing through the first point (S) and a straight line of gradient (α2) decreasing in the downstream direction and passing through the second point (N2), the second gradient (α2) being greater than the first (α1).

10. Apparatus according to claim 9, **characterised in that** the computing means are arranged so as to establish the vertical velocity of the aircraft towards the ground, and the residual height of the aircraft above the low boundary of the vertical delimitation of the approach sector, and **in that** the tendency of a predicted trajectory to remain vertically within the convergence sector (VDG) is likened to the fact that said residual height is greater than a limiting height/ velocity curve, an intermediate part of said limiting curve decreasing with the reduction in velocity towards the ground.

11. Apparatus according to one of the preceding claims, **characterised in that** the condition signal comprises a condition relating to the configuration of the aircraft (CnC).

12. Apparatus according to claim 11, **characterised in that** the condition relating to the configuration of the aircraft (CnC) comprises a condition (CnC1) relating to the lowering of the landing gear, and at least one condition (CnC2, CnC3) relating to the flaps.

13. Apparatus according to one of the preceding claims, comprising means (2, 3, 4, 51) capable of generating an alert in the event of an imminent collision between the aircraft and the ground, and means (102) capable of inhibiting at least some of the alerts in the presence of an inhibition signal (CnG), **characterised in that** the inhibition signal (CnG) is drawn from the condition signal (CnA).

**Patentansprüche**

1. Landehilfvorrichtung, mit Verarbeitungseinrichtungen (102), die einerseits Flugbahndaten des Flugzeugs (2) und andererseits Daten über die Position wenigstens einer Landepiste (100) erhalten,
   **dadurch gekennzeichnet, dass** die Verarbeitungseinrichtungen Recheneinrichtungen (102) aufweisen, die in der Lage sind, ein Zustandssignal (CnA) zu liefern, das wenigstens teilweise basiert auf:

   - eine statische Annäherungsbedingung (CnAS) als Funktion der Flugbahndaten und der Daten der Piste und die die Zugehörigkeit der aktuellen Position des Flugzeugs (2) zu einem Annäherungssektor (HSG, VSG) ausdrücken, wobei der Annäherungssektor definiert und begrenzt wird bzgl. einer Landepiste (LP) und
   - einer dynamischen Annäherungsbedingung (CnAD), als Funktion der Tendenz einer Vorhersage der Flugbahn basierend auf dem Weg und der aktuellen Geschwindigkeit des Flugzeugs (2) zum Verbleib in einem Konvergenzsektor (HDG, VDG), wobei der Konvergenzsektor bzgl. einer Landepiste (LP) definiert und begrenzt wird, derart, dass in dem Konvergenzsektor die Komponente der Geschwindigkeit des Flugzeugs gemäß einer Querachse zu einer Achse der Piste mit einem rechtzeitigen Zurückkehren in die Achse der Piste kompatibel ist.

2. Vorrichtung nach Anspruch 1, **dadurch gekennzeichnet, dass** die Landepiste definiert ist durch eine gespeicherte Darstellung (100).

3. Vorrichtung nach Anspruch 1, **dadurch gekennzeichnet, dass** die Daten über die Position der Landepiste eine Darstellung eines Referenzpunktes (G) aufweisen, als nominaler Auftreffpunkt auf dem Boden der Anflugbahn, mit entsprechend der Richtung (GN) der Achse der Piste in Landerichtung, dass die Recheneinrichtungen in der Lage sind, zwei Hilfspunkte (W, E) zu definieren, die mit gewählten Abständen beiderseits des Referenzpunktes (G) angeordnet sind, auf einer Quergeraden zur identifizierten Piste und durch den Referenzpunkt G hindurchgehend, dass der Annäherungssektor (HSG) seitlich durch zwei Linien (W-SM1-SN1-SQ1; E-SM2-SN2-SQ2) begrenzt ist, die entsprechend von den beiden Hilfspunkten (W, E) ausgehen, und die sich beiderseits der Achse der Piste aufweiten, wobei sie sich von der Landepiste entfernen, bis zu einer maximalen Distanz bzgl. des Referenzpunktes (G).

4. Vorrichtung nach Anspruch 3, **dadurch gekennzeichnet, dass** die Recheneinrichtungen in der Lage sind, die Winkel (β, γ) zwischen der Achse der Piste und den Geraden (AE, AW) zu berechnen, die die aktuelle Position (A) des Flugzeugs mit den zwei Hilfspunkten (W, E) verbinden, während der Annäherungssektor (HSG) Punkte aufweist, für die der schwächste der beiden Winkel (β, γ) geringer ist als eine Grenzkurve Winkel/Distanz (HSGL) von der ein Abschnitt abnehmend ist mit der Verringerung der Distanz (Dh) des Flugzeugs zu dem Referenzpunkt (G).

5. Vorrichtung nach Anspruch 4, **dadurch gekennzeichnet, dass** die Abnahme der Grenzkurve (HSGL) von ungefähr 40° für eine Distanz von ungefähr 4.000 Meter zu ungefähr 8° für eine Distanz von ungefähr 900 Meter geht.

6. Vorrichtung nach einem der Ansprüche 3 bis 5, **dadurch gekennzeichnet, dass** der Annäherungssektor (HSG) darüber hinaus eine im Wesentlichen rechteckige Zone aufweist, von der eine Seite durch die beiden Hilfspunkte (W, E) definiert ist, und von der die gegenüberliegende Seite durch einen Punkt (N) hindurchgeht, der mit vorgewähltem Abstand sich stromab des Referenzpunktes (G) auf der Achse der Piste befindet.

7. Vorrichtung nach Anspruch 3, **dadurch gekennzeichnet, dass** die Recheneinrichtungen in der Lage sind, zwei Hilfspunkte (W2, E2) zu definieren, die sich mit gewählten Abständen beiderseits des Referenzpunktes (G) befinden, auf einer Quergeraden zur identifizierten Piste und durch den Referenzpunkt G gehend, um den Winkel (δ) zwischen der horizontalen Projektion der Annäherungsspitze des Flugzeugs (AB) und der Achse der Piste (GN) und zum Bestimmen von zwei seitlichen Grenzen (LKW2, LKE2) des Konvergenzsektors, die entsprechend von zwei Hilfspunkten (W2, E2) ausgehen und sich beiderseits der Achse der Piste aufweiten, wobei sie sich von der Landepiste entfernen, sowie einer Spanne (Dhd), gezogen aus dem Abstand zwischen der horizontalen Position des Flugzeugs und der am weisest entfernten der beiden Grenzen, sofern sich das Flugzeug nicht gleichzeitig von den beiden Grenzen entfernt, und dass die Tendenz einer Vorhersage der seitlich verbleibenden Bahn in dem Konvergenzsektor (HDG) mit der Tatsache verglichen wird, dass der Winkel (δ) zwischen der horizontalen Projektion der Annäherungsspitze und der Achse der Piste geringer ist als eine Grenzkurve Spitze/Spanne (HDGL), eine Grenzkurve, deren Zwischenabschnitt mit der Verringerung der Spanne abnehmend ist.

8. Vorrichtung nach Anspruch 7, **dadurch gekennzeichnet, dass** die Annäherungsspitze definiert wird ausgehend von einem Richtungsvektor (AB), der von der aktuellen Position des Flugzeugs (A) mit einer Messung und einer Berichtung genommen aus der horizontalen Augenblicksgeschwindigkeit des Flugzeugs und dem Winkel (δ), den dieser Vektor (AB) mit der Achse (GN) der Piste bildet.

9. Vorrichtung nach Anspruch 3, **dadurch gekennzeichnet, dass** die Recheneinrichtungen in der Lage sind, zwei weitere Hilfspunkte (S, N2) zu definieren, von denen einer auf der Achse der Piste mit einem gewellten Abstand stromauf des Referenzpunktes (G) sich befindet und der andere mit einem gewählten Abstand schon ab des Referenzpunktes (G) und auf einer gewählten Höhe und dass die vertikale Begrenzung des Annäherungssektors die Punkte aufweist, deren Abstand stromauf des Referenzpunktes (G) geringer als ein Schwellenwert ist, und die sich zwischen einer geneigten Geraden (α 1), die nach hinten abnimmt, die durch den ersten Punkt (S) geht und einer geneigten Geraden (α 2) die nach hinten abnimmt und durch den zweiten Punkt (N2) geht, wobei die zweite Neigung (α 2) größer ist als die erste (α 1).

10. Vorrichtung nach Anspruch 9, **dadurch gekennzeichnet, dass** die Recheneinrichtungen in der Lage sind, die vertikale Geschwindigkeit des Flugzeugs zum Boden hin und die verbleibende Höhe des Flugzeugs über der unteren Grenze der vertikalen Begrenzung des Annäherungssektors einzustellen, und dass die Tendenz einer Vorhersage der vertikal verbleibenden Bahn in dem Konvergenzsektor (VDG) verglichen wird mit der Tatsache, dass die verbleibende Höhe größer ist als eine Grenzkurve Höhe/Geschwindigkeit, eine Grenzkurve von der ein Zwischenabschnitt mit der Verringerung der Geschwindigkeit zu dem Boden hin abnehmend ist.

11. Vorrichtung nach einem der vorhergehenden Ansprüche, **dadurch gekennzeichnet, dass** das Zustandssignal eine Bedingung auf die Konfiguration des Flugzeugs (CnC) aufweist.

12. Vorrichtung nach Anspruch 11, **dadurch gekennzeichnet, dass** die Bedingung auf die Konfiguration des Flugzeugs (CnC) eine Bedingung (CnC1), die sich auf den Austritt des Fahrgestells stützt und wenigstens eine Bedingung (CnC2, CnC3) bezogen auf die Landeklappen aufweist.

13. Vorrichtung nach einem der vorhergehenden Ansprüche, mit Einrichtungen (2, 3, 4, 51), die in der Lage sind, einen Alarm im Falle einer bevorstehenden Kollision Flugzeug/Boden zu erzeugen, und Einrichtungen (102) aufweist, die in der Lage sind, wenigstens bestimmte der Alarme bei Vorhandensein eines Hemmsignals (CnG) zu hemmen, **dadurch gekennzeichnet, dass** dieses Hemmsignal (CnG) aus dem Zustandssignal (CnA) genommen wird.

FIG.1

FIG.2

FIG.3

FIG.4

$\alpha = \min(\beta, \delta) \in HSG\ (AG)$

FIG.5

FIG.7

FIG.6A

EP 0 989 386 B1

FIG.6

FIG.8

FIG.9

**EP 0 989 386 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2729374
- FR 2717934
- EP 0565399 A
- FR 9604678
- EP 0802469 A
- FR 9800207